(19) Europäisches Patentamt
European Patent Office
Office européen des brevets

(11) **EP 4 749 565 A1**

(12) **EUROPEAN PATENT APPLICATION**

(43) Date of publication:
**27.05.2026 Bulletin 2026/22**

(21) Application number: **25182254.0**

(22) Date of filing: **12.06.2025**

(51) International Patent Classification (IPC):
**G06T 7/00** (2017.01)   **G06T 13/20** (2011.01)

(52) Cooperative Patent Classification (CPC):
**G06T 7/0012; G06T 13/40;** G06T 2207/10081;
G06T 2207/10116; G06T 2207/10124;
G06T 2207/20084; G06T 2207/20124;
G06T 2207/30008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.11.2024   TW 113144688**

(71) Applicant: **MetaTech (AP) Inc.
New Taipei City 221 (TW)**

(72) Inventors:
• **Lu, Tung-Wu
235 New Taipei City (TW)**
• **Wu, Kuan Hsien
116059 Taipei City (TW)**

(74) Representative: **Wang, Bo
Panovision IP
Ebersberger Straße 3
85570 Markt Schwaben (DE)**

(54) **MEASUREMENT SYSTEM AND METHOD FOR PERSONALIZED BONE AND ARTICULAR CARTILAGE MORPHOLOGY**

(57)   A measurement system for personalized bone and articular cartilage morphology comprises a database, an image capture module, an image analysis module, a neural network model, a model building module, and a novel computation module. The database is configured to store a dataset. The image capture module is configured to capture a plurality of skeletal images of a subject. The image analysis module is configured to obtain skeletal and cartilage shape parameters through statistical shape modeling and principal component analysis and generate 3D models of the skeleton and cartilage. The neural network model is configured to generate and output skeletal motion parameters based on the input skeletal and cartilage shape parameters. The model building module is configured to generate a personalized joint skeleton and cartilage model based on the 3D models of the skeleton and cartilage and the skeletal motion parameters. The novel computation module is configured to simulate the relative positions of the first bone and cartilage 3D model and the second bone and cartilage 3D model of the subject during exercise based on the personalized joint skeleton and cartilage model, and to calculate an actual cartilage shape and the cartilage wear value of the subject by eliminating overlapping cartilage regions in the first bone and cartilage 3D model and the second bone and cartilage 3D model during exercise.

measurement system for personalized bone and articular cartilage morphology

**FIG. 1**

Description

BACKGROUND OF THE INVENTION

## 1. Field of the invention

The invention relates to a joint bone and cartilage measurement system and method, explicitly referring to a measurement system and method for personalized bone and articular cartilage morphology that applies artificial intelligence techniques.

## 2. Description of the prior art

Cartilage is a type of connective tissue that plays a crucial role in human joints by helping to reduce impact and friction during joint movement, thereby ensuring smooth joint function. However, cartilage is susceptible to damage due to aging, excessive use of joints, or trauma, which may lead to osteoarthritis (OA). Osteoarthritis, also known as degenerative arthritis, is characterized by damage to joint cartilage or subchondral bone. It commonly affects the distal joints of the fingers, the base of the thumb, the neck, the lower back, the knees, and the hips, with knee osteoarthritis (Knee OA) being the most prevalent. In this condition, joint inflammation and damage result in changes to the bones, degeneration of tendons and ligaments, and cartilage wear, leading to joint pain, swelling, deformity, impaired joint function, and a decline in quality of life. Therefore, early diagnosis and monitoring of treatment effectiveness are vital for targeted therapy, making the detection of cartilage changes a critical component.

Conventional detection of cartilage changes typically relies on traditional clinical assessments and imaging methods such as X-rays and MRI. The most commonly used grading system for osteoarthritis is the Kellgren-Lawrence Grading System. Based on standing knee X-ray images, this system categorizes knee osteoarthritis into five grades according to the degree of joint space narrowing (indicating cartilage wear) and osteophyte formation. However, both X-ray and MRI methods have limitations. For instance, X-rays cannot provide direct information about the cartilage; they only infer the severity of knee osteoarthritis by assessing the space between bones. Furthermore, differences in evaluations among physicians can occur. MRI is constrained by image quality, making it difficult to delineate the damaged cartilage from the healthy cartilage precisely. Additionally, both methods can only capture static information, require high costs and specialized equipment, and are influenced by the operator's expertise.

Therefore, developing a new joint bone and cartilage measurement system and method is necessary to address the aforementioned conventional issues.

SUMMARY OF THE INVENTION

In view of this, one scope of the present invention is to provide a measurement system for personalized bone and articular cartilage morphology to solve the aforementioned problems. The measurement system for personalized bone and articular cartilage morphology, applied to construct a personalized joint skeleton and cartilage model of a subject and calculating a cartilage wear value of the subject based on the personalized joint skeleton and cartilage model, the system comprising: a database, configured to store a dataset, wherein the dataset comprises a plurality of joint bone and cartilage images of a plurality of healthy individuals, a 3D bone and cartilage model corresponding to the plurality of joint bone and cartilage images and a plurality of shape parameters; an image capture module, configured to capture a plurality of bone images of the subject, each of the bone images comprising a first bone image and a second bone image; an image analysis module, coupled with the image capture module and the database, and configured to generate the 3D bone and cartilage model of the subject by applying a statistical shape model (SSM) learned from the dataset through the bone images of the subject and, through principal component analysis (PCA), to generate a plurality of first bone and cartilage shape parameters corresponding to the first bone image and a plurality of second bone and cartilage shape parameters corresponding to the second bone image based on the 3D bone and cartilage model and the shape parameters, generate a first bone and cartilage 3D model and a second bone and cartilage 3D model based on the first bone and cartilage shape parameters and the second bone and cartilage shape parameters; a neural network model, coupled with the image analysis module, and configured to input the first bone and cartilage shape parameters and the second bone and cartilage shape parameters into the neural network model and generate a plurality of first bone motion parameters and a plurality of second bone motion parameters corresponding to the first bone and cartilage shape parameters and the second bone and cartilage shape parameters, wherein the neural network model is trained by a machine learning method based on the dataset; a model building module, coupled with the image analysis module and the neural network model, and configured to generate the personalized joint skeleton and cartilage model based on the first bone and cartilage 3D model, the second bone and cartilage 3D model, the first bone motion parameters and the second bone motion parameters; a novel computation module, coupled with the model building module, and configured to simulate the relative positions of the first bone and cartilage 3D model and the second bone and cartilage 3D model of the subject during exercise based on the personalized joint skeleton and cartilage model, and to calculate an actual cartilage shape and the cartilage wear value of the subject by eliminating overlapping cartilage regions in the first bone and cartilage 3D model and the second bone and cartilage 3D model during exercise.

Wherein, the measurement system for personalized bone and articular cartilage morphology further comprises an image registration module. The image registration module is coupled with the image analysis module and the model building module, and configured to adjust and project the angle and position of the first bone and cartilage 3D model and the second bone and cartilage 3D model, and compare the joint bone and cartilage images from the healthy individuals in the dataset by a single-plane dynamic image registration method to calculate the first bone motion parameters and the second bone motion parameters of the subject.

Wherein, each of the bone images of the subject further comprises an X-ray image.

Wherein, the first bone motion parameters and the second bone motion parameters further comprise a translation parameter and a rotation parameter along the three directions of the XYZ axes.

Wherein, the personalized joint skeleton and cartilage model is further visualized through a heatmap and a perspective visualization method.

Another scope of the present invention is to provide a measurement method for personalized bone and articular cartilage morphology. The method comprises the following steps: storing a dataset to a database, wherein the dataset comprises a plurality of joint bone and cartilage images of a plurality of healthy individuals, a 3D bone and cartilage model corresponding to the plurality of joint bone and cartilage images and a plurality of shape parameters; an image capture module capturing a plurality of bone images of the subject, each of the bone images comprising a first bone image and a second bone image; an image analysis module generating the 3D bone and cartilage model of the subject by applying a statistical shape model (SSM) learned from the dataset through the bone images of the subject and, through principal component analysis (PCA), generating a plurality of first bone and cartilage shape parameters corresponding to the first bone image and a plurality of second bone and cartilage shape parameters corresponding to the second bone image based on the 3D bone and cartilage model and the shape parameters, generating a first bone and cartilage 3D model and a second bone and cartilage 3D model based on the first bone and cartilage shape parameters and the second bone and cartilage shape parameters; inputting the first bone and cartilage shape parameters and the second bone and cartilage shape parameters into a neural network model and generate a plurality of first bone motion parameters and a plurality of second bone motion parameters corresponding to the first bone and cartilage shape parameters and the second bone and cartilage shape parameters, wherein the neural network model is trained by a machine learning method based on the dataset; a model building module generating the personalized joint skeleton and cartilage model based on the first bone and cartilage 3D model, the second bone and cartilage 3D model, the first bone motion parameters and the second bone motion parameters; a novel computation module simulating the relative positions of the first bone and cartilage 3D model and the second bone and cartilage 3D model of the subject during exercise based on the personalized joint skeleton and cartilage model, and to calculate an actual cartilage shape and the cartilage wear value of the subject by eliminating overlapping cartilage regions in the first bone and cartilage 3D model and the second bone and cartilage 3D model during exercise.

Wherein, the measurement method for personalized bone and articular cartilage morphology further comprises the following steps: an image registration module adjusting and projecting the angle and position of the first bone and cartilage 3D model and the second bone and cartilage 3D model, and compare the joint bone and cartilage images from the healthy individuals in the dataset by a single-plane dynamic image registration method to calculate the first bone motion parameters and the second bone motion parameters of the subject.

Wherein, each of the bone images of the subject further comprises an X-ray image.

Wherein, the first bone motion parameters and the second bone motion parameters further comprise a translation parameter and a rotation parameter along the three directions of the XYZ axes.

Wherein, the personalized joint skeleton and cartilage model is further visualized through a heatmap and a perspective visualization method.

**In** summary, the present invention provides a measurement system for personalized bone and articular cartilage morphology that integrates dynamic X-ray technology with artificial intelligence (AI) to reconstruct the structure of joint bones and cartilage. The system further reconstructs a model of the patient's knee joint bones and cartilage, accurately calculating the degree and location of cartilage changes. Additionally, the personalized joint skeleton and cartilage model created by the invention uses heatmap and perspective visualization to offer an intuitive understanding of cartilage health, enabling faster and more comprehensive cartilage assessments. This AI-based system for measuring 3D joint bone and cartilage through planar X-rays provides physicians with dynamic and precise diagnostic information, facilitating the development of personalized treatment plans for each patient and evaluating the effectiveness of treatments.

## BRIEF DESCRIPTION OF THE APPENDED DRAWINGS

FIG. 1 is a functional block diagram of a measurement system for personalized bone and articular cartilage morphology according to an embodiment of the present invention.

FIG. 2 is a flowchart diagram of a measurement method for personalized bone and articular cartilage morphology according to an embodiment of the present invention.

FIG. 3 is a functional block diagram of a measurement system for personalized bone and articular cartilage morphology according to another embodiment of the present invention.

FIG. 4 is a flowchart diagram of a measurement method for personalized bone and articular cartilage morphology according to another embodiment of the present invention.

## DETAILED DESCRIPTION OF THE INVENTION

For the sake of the advantages, spirits and features of the present invention can be understood more easily and clearly, the detailed descriptions and discussions will be made later by way of the embodiments and with reference of the diagrams. It is worth noting that these embodiments are merely representative embodiments of the present invention, wherein the specific methods, devices, conditions, materials and the like are not limited to the embodiments of the present invention or corresponding embodiments. Moreover, the devices in the figures are only used to express their corresponding positions and are not drawing according to their actual proportion.

In the description of this specification, the description with reference to the terms "an embodiment", "another embodiment" or "part of an embodiment" means that a particular feature, structure, material or characteristic described in connection with the embodiment including in at least one embodiment of the present invention. In this specification, the schematic representations of the above terms do not necessarily refer to the same embodiment. Furthermore, the particular features, structures, materials or characteristics described may be combined in any suitable manner in one or more embodiments. Furthermore, the indefinite articles "a" and "an" preceding a device or element of the present invention are not limiting on the quantitative requirement (the number of occurrences) of the device or element. Thus, "a" should be read to include one or at least one, and a device or element in the singular also includes the plural unless the number clearly refers to the singular.

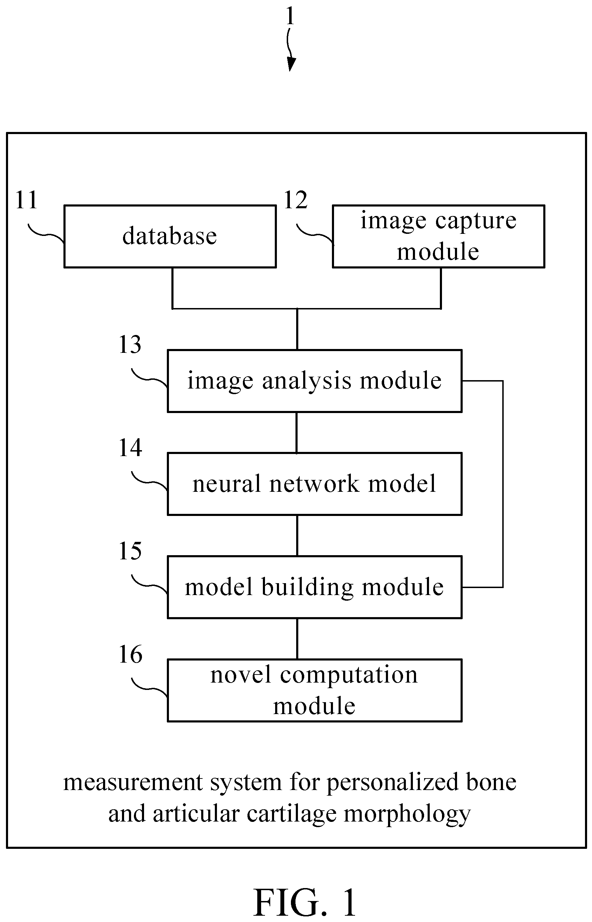

Please refer to FIG. 1. FIG. 1 is a functional block diagram of a measurement system 1 for personalized bone and articular cartilage morphology according to an embodiment of the present invention. As shown in FIG. 1, the measurement system 1 for personalized bone and articular cartilage morphology of the present embodiment includes a database 11, an image capture module 12, an image analysis module 13, a neural network model 14, a model building module 15, and a novel computation module 16. The database 11 is configured to store a dataset. The dataset comprises a plurality of joint bone and cartilage images of a plurality of healthy individuals, a 3D bone and cartilage model corresponding to the plurality of joint bone and cartilage images and a plurality of shape parameters. The image capture module 12 is configured to capture a plurality of bone images of the subject, each of the bone images comprising a first bone image and a second bone image. The image analysis module 13 is coupled with the image capture module 12 and the database 11. The image analysis module 13 is configured to generate the 3D bone and cartilage model of the subject by applying a statistical shape model (SSM) learned from the dataset through the bone images of the subject and, through principal component analysis (PCA), to generate a plurality of first bone and cartilage shape parameters corresponding to the first bone image and a plurality of second bone and cartilage shape parameters corresponding to the second bone image based on the 3D bone and cartilage model and the shape parameters, generate a first bone and cartilage 3D model and a second bone and cartilage 3D model based on the first bone and cartilage shape parameters and the second bone and cartilage shape parameters. The neural network model 14 is coupled with the image analysis module 13 and is configured to input the first bone and cartilage shape parameters and the second bone and cartilage shape parameters into the neural network model 14 and generate a plurality of first bone motion parameters and a plurality of second bone motion parameters corresponding to the first bone and cartilage shape parameters and the second bone and cartilage shape parameters. Wherein, the neural network model 14 is trained by a machine learning method based on the dataset. The model building module 15 is coupled with the image analysis module 13 and the neural network model 14 and is configured to generate the personalized joint skeleton and cartilage model based on the first bone and cartilage 3D model, the second bone and cartilage 3D model, the first bone motion parameters and the second bone motion parameters. The novel computation module 16 is coupled with the model building module 15 and configured to simulate the relative positions of the first bone and cartilage 3D model and the second bone and cartilage 3D model of the subject during exercise based on the personalized joint skeleton and cartilage model, and to calculate an actual cartilage shape and the cartilage wear value of the subject by eliminating overlapping cartilage regions in the first bone and cartilage 3D model and the second bone and cartilage 3D model during exercise. In the present embodiment, each of the bone images of the subject further comprises an X-ray image. The first bone motion parameters and the second bone motion parameters further comprise a translation parameter and a rotation parameter along the three directions of the XYZ axes.

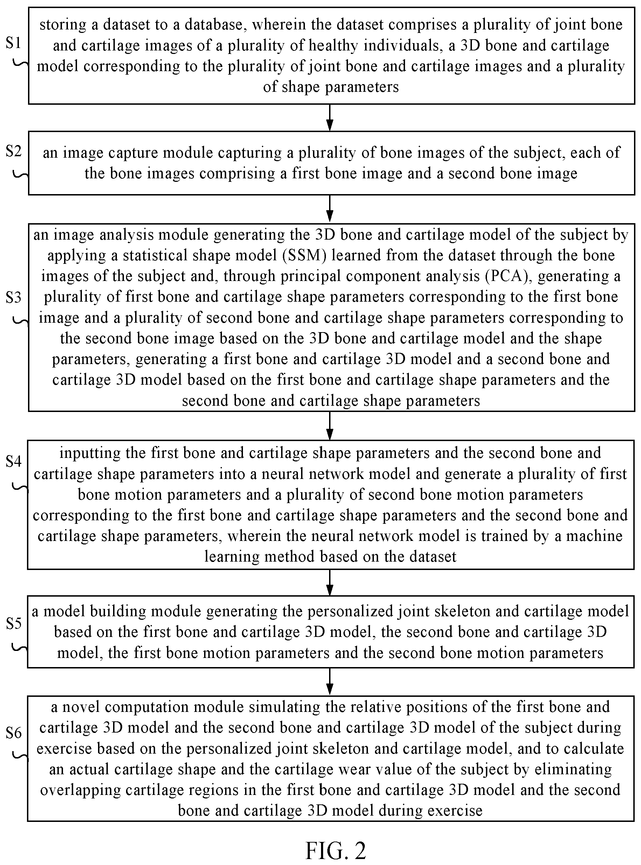

Please refer to both FIG. 1 and FIG.2. FIG. 2 is a flowchart diagram of a measurement method for personalized bone and articular cartilage morphology according to an embodiment of the present invention. The steps of the measurement method for personalized bone and articular cartilage morphology shown in FIG. 2 can be accomplished through the measurement system 1 for personalized bone and articular cartilage morphology shown in FIG. 1. As shown in FIG. 2, in the present embodiment, the measurement method for personalized bone and articular cartilage morphology comprises the following steps: step S1: storing a dataset to a database 11, wherein the dataset comprises a plurality of joint bone and cartilage images of a plurality of healthy individuals, a 3D bone and cartilage model corresponding to the plurality of joint bone and cartilage images and a plurality of shape parameters; step S2: an image capture module 12 capturing a plurality of bone images of the subject, each of the bone images comprising a first bone image and a second bone image; step S3: an image analysis module 13 generating the 3D bone and cartilage model of the subject by applying a statistical shape model (SSM) learned from the dataset through the bone images of the subject and, through principal component analysis (PCA), generating a plurality of first bone and cartilage shape parameters corresponding to the first bone image and a plurality of second bone and cartilage shape parameters corresponding to the second bone image based on the 3D bone and cartilage model and the shape parameters, generating a first bone and cartilage 3D model and a second bone and cartilage 3D model based on the first bone and cartilage shape parameters and the second bone and cartilage shape parameters; step S4: inputting the first bone and cartilage shape parameters and the second bone and cartilage shape parameters into a neural network model 14 and generate a plurality of first bone motion parameters and a plurality of second bone motion parameters corresponding to the first bone and cartilage shape parameters and the second bone and cartilage shape parameters, wherein the neural network model 14 is trained by a machine learning method based on the dataset; step S5: a model building module 15 generating the personalized joint skeleton and cartilage model based on the first bone and cartilage 3D model, the second bone and cartilage 3D model, the first bone motion parameters and the second bone motion parameters; step S6: a novel computation module 16 simulating the relative positions of the first bone and cartilage 3D model and the second bone and cartilage 3D model of the subject during exercise based on the personalized joint skeleton and cartilage model, and to calculate an actual cartilage shape and the cartilage wear value of the subject by eliminating overlapping cartilage regions in the first bone and cartilage 3D model and the second bone and cartilage 3D model during exercise

Additionally, the personalized joint skeleton and cartilage model can be generated by adjusting the shape parameters of the model based on joint features, utilizing a statistical shape model (SSM) combined with principal component analysis (PCA). In practical applications, the measurement system for personalized bone and articular cartilage morphology described in this embodiment can be applied to reconstruct a personalized knee joint model. In practice, once the knee joint sample model database has been established, the sample models in the database can be further used as training models to compute an average model and establish shape variation. The shape variation can be derived through principal component analysis (PCA), yielding the eigenvalue $\lambda_i$ and the eigenvector $\phi_i$. The following formula can express a new knee joint model:

$$x = \overline{x} + \sum_{i=1}^{c} b_i \phi_i$$

Where $b_i$ represents the shape model parameters corresponding to the model.

In practice, artificial intelligence (AI) can further be used to construct a 3D bone and cartilage model of the joint. Combining the model with dynamic X-ray kinematic calculation methods makes it possible to obtain the bone distance distribution between the femur and tibia during passive flexion and extension movements at each point in time. Furthermore, the bone distance distributions can be compared with the cartilage 3D model previously established using artificial intelligence to assess cartilage thickness and calculate penetration areas, penetration depth, and penetration volume, so as to evaluate the extent of cartilage wear and its severity distribution. The personalized joint skeleton and cartilage model can be further visualized through a heatmap and a perspective visualization method. This method helps in a more comprehensive evaluation of joint cartilage health, and detecting cartilage changes through this process can serve as a novel method for assessing the effectiveness of treatments.

Furthermore, in practice, the database plays a crucial role in machine learning, providing the foundational data for training, evaluating, and improving machine learning models. As a result, the machine learning model can learn from the data within the database and adjust its parameters accordingly. In the embodiment described herein, the data stored in the database can include the plurality of bone images of the plurality of joints, the plurality of bone models corresponding to the bone images, 3D bone and cartilage models, the plurality of position parameters of the joints, and the plurality of 3D cartilage models.

In practice, creating a personalized joint skeleton and cartilage model requires dynamic X-ray images from different planes. Through image registration techniques, the skeletal components of the reconstructed three-dimensional (3D) joint model are compared to dynamic X-ray images, and the optimal model shape parameters are determined using artificial intelligence (AI) and machine learning methods. This enables the reconstruction of a personalized 3D joint model. The image registration process involves geometric transformations of two or more images to align or match them spatially. It can also compare and match 3D objects with 2D images to determine their correct position in real-world space. This process can include translation, rotation, and scaling to align specific features or regions between images. The personalized joint skeleton and cartilage model can further include the distal femur, proximal tibia, and cartilage in the present embodiment. The image registration method is also used to determine the relative positions of the distal femur, proximal tibia, and cartilage to obtain an accurate knee joint model.

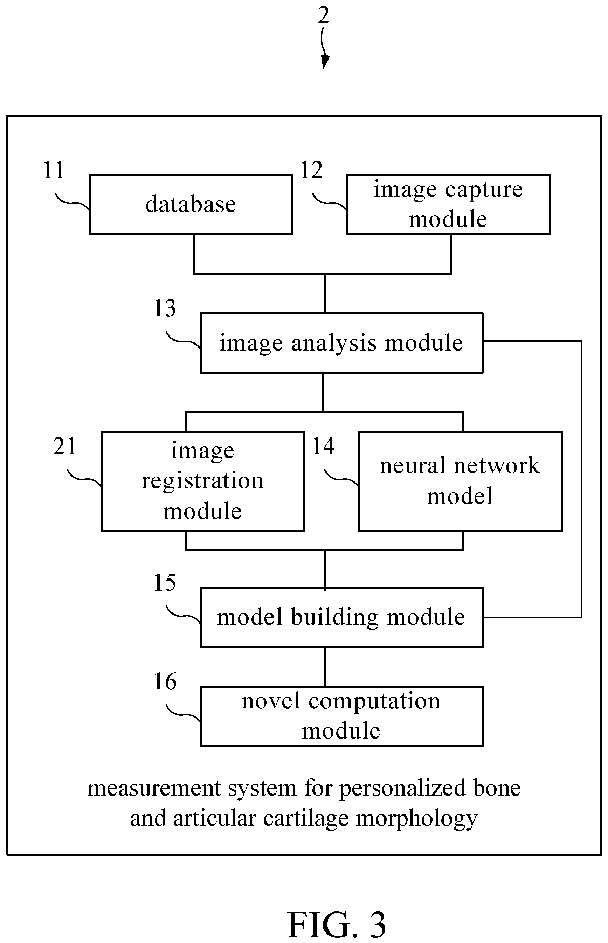

Please refer to FIG. 3. FIG. 3 is a functional block diagram of a measurement system 2 for personalized bone and articular cartilage morphology according to another embodiment of the present invention. As shown in FIG. 3, this embodiment differs from the previously described embodiment in that it includes an image registration module 21. In this embodiment, the image registration module 21 is coupled with the image analysis module 13 and the model building module 15. The image registration module 21 is configured to adjust and project the angle and position of the first bone and cartilage 3D model and the second bone and cartilage 3D model, and compare the joint bone and cartilage images from the healthy individuals in the dataset by a single-plane dynamic image registration method to calculate the first bone motion parameters and the second bone motion parameters of the subject.

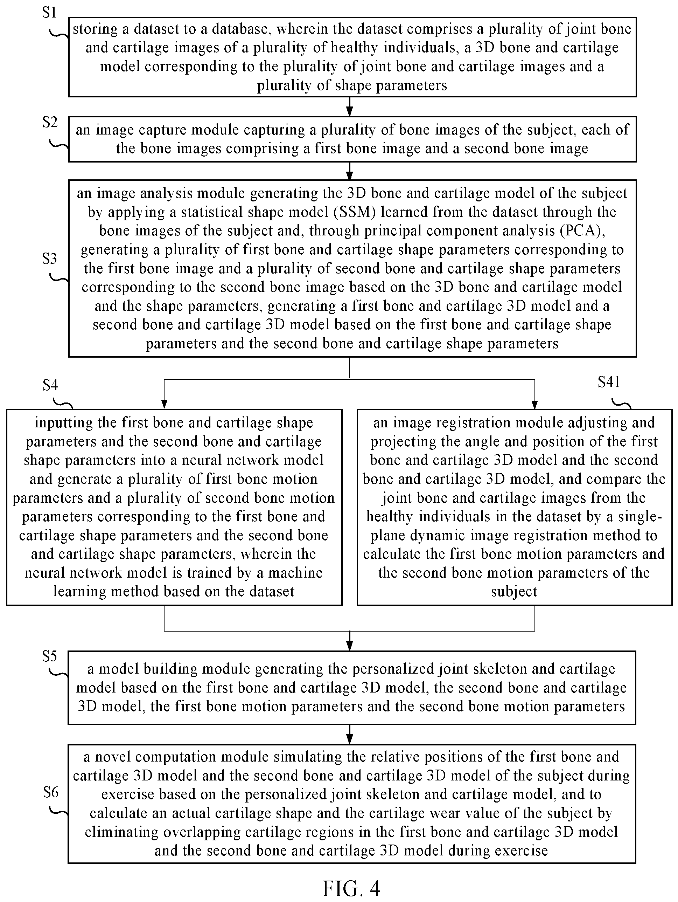

Please refer to FIG. 3 and FIG.4. FIG. 4 is a flowchart diagram of a measurement method for personalized bone and articular cartilage morphology according to another embodiment of the present invention. The steps of the method shown in FIG. 4 can be implemented using the measurement system for personalized bone and articular cartilage morphology 2 in FIG. 3. This embodiment differs from the previously described embodiments by further including the following steps, which are executed after step S3. Step S41: an image registration module 21 adjusting and projecting the angle and position of the first bone and cartilage 3D model and the second bone and cartilage 3D model, and compare the joint bone and cartilage images from the healthy individuals in the dataset by a single-plane dynamic image registration method to calculate the first bone motion parameters and the second bone motion parameters of the subject.

In practice, the database can include a knee joint sample model database, which stores personalized knee joint models of healthy individuals and patients generated from computed tomography (CT) scans. This data serves as a source for machine learning. The personalized knee joint models can include the distal femur, proximal tibia, and cartilage. First, a CT scan is performed over an appropriate joint scan range (i.e., ensuring the knee joint is positioned at the center of the image). The CT images acquired by the image capture module are imported into visualization software for image segmentation, and the segmented data is stacked using a 3D modeling module to construct a 3D bone and cartilage model. The image registration module aligns the 3D bone and cartilage model with other images and computes 3D kinematic information of the knee joint, including translation and rotation along the X, Y, and Z axes. In practice, the image registration module can use a graphic user interface (GUI) developed in MATLAB, implementing single-plane image matching techniques. The interface allows users to adjust the position of bones in 3D space, visually aligning them with dynamic X-ray images. This alignment serves as the initial guess for determining the six degrees of freedom (6-DOF) for the 3D bone and cartilage model. Using the calibrated parameters from the system and distortion correction parameters from the dynamic X-ray system, digitally reconstructed radiographs (DRRs) are generated. By continuously adjusting the 6-DOF position of the 3D model, new DRR images $I_{DRR}$ are generated and compared with the dynamic X-ray images ($I_{fl}$). Optimization algorithms are then used to find the optimal spatial position of the bones. The optimization can employ vectorized genetic algorithms, and the similarity measurement can use the gradient difference (GD) method. This method applies horizontal and vertical Sobel operators to both $I_{DRR}$ and $I_{fl}$, resulting in four gradient images: $dI_{DRR}/di$, $dI_{DRR}/dj$, $dI_{fl}/di$, $dI_{fl}/dj$. The difference between the gradient images yields the vertical and horizontal gradient difference images $I_{diffV}$ and $I_{diffH}$, respectively. The similarity metric based on the Gradient Difference method is expressed as:

$$f_{GD} = \sum_{u,v} \frac{AV}{AV + (I_{diffV}(u,v))^2} + \sum_{u,v} \frac{AH}{AH + (I_{diffH}(u,v))^2}$$

The data stored in the database and its collection methods are not limited to those described here and can be selected based on user requirements. It should be noted that the modules and functionalities of the measurement system 2 for personalized bone and articular cartilage morphology in the present embodiment are generally similar to those described in the previous embodiments, so they will not be repeated here. The present embodiment uses joint images and data obtained from CT scans to build a training model. Using dynamic X-ray technology and artificial intelligence, it reconstructs the patient's knee joint bones and cartilage using machine learning. In this way, cartilage changes and positioning can be determined more accurately. Furthermore, this embodiment addresses the limitations of conventional X-ray and MRI methods, which cannot directly acquire cartilage information or precisely determine its location. Additionally, it provides dynamic joint information without requiring specialized equipment or being affected by operator skills, thereby reducing time and labor costs.

In summary, the present invention provides a measurement system for personalized bone and articular cartilage morphology that integrates dynamic X-ray technology with artificial intelligence (AI) to reconstruct the structure of joint bones and cartilage. The system further reconstructs a model of the patient's knee joint bones and cartilage, accurately calculating the degree and location of cartilage changes. Additionally, the personalized joint skeleton and cartilage model created by the invention uses heatmap and perspective visualization to offer an intuitive understanding of cartilage health, enabling faster and more comprehensive cartilage assessments. This AI-based system for measuring 3D joint bone and cartilage through planar X-rays provides physicians with dynamic and precise diagnostic information, facilitating the development of personalized treatment plans for each patient and evaluating the effectiveness of treatments.

With the examples and explanations mentioned above, the features and spirits of the invention are hopefully well described. More importantly, the present invention is not limited to the embodiment described herein. Those skilled in the art will readily observe that numerous modifications and alterations of the device may be made while retaining the teachings of the invention. Accordingly, the above disclosure should be construed as limited only by the metes and bounds of the appended claims.

**Claims**

1.  A measurement system for personalized bone and articular cartilage morphology, applied to construct a personalized joint skeleton and cartilage model of a subject and calculating a cartilage wear value of the subject based on the personalized joint skeleton and cartilage model, the system comprising:

    a database, configured to store a dataset, wherein the dataset comprises a plurality of joint bone and cartilage images of a plurality of healthy individuals, a 3D bone and cartilage model corresponding to the plurality of joint bone and cartilage images and a plurality of shape parameters;

    an image capture module, configured to capture a plurality of bone images of the subject, each of the bone images comprising a first bone image and a second bone image;

    an image analysis module, coupled with the image capture module and the database, and configured to generate the 3D bone and cartilage model of the subject by applying a statistical shape model (SSM) learned from the dataset through the bone images of the subject and, through principal component analysis (PCA), to generate a plurality of first bone and cartilage shape parameters corresponding to the first bone image and a plurality of second bone and cartilage shape parameters corresponding to the second bone image based on the 3D bone and cartilage model and the shape parameters, generate a first bone and cartilage 3D model and a second bone and cartilage 3D model based on the first bone and cartilage shape parameters and the second bone and cartilage shape parameters;

    a neural network model, coupled with the image analysis module, and configured to input the first bone and cartilage shape parameters and the second bone and cartilage shape parameters into the neural network model and generate a plurality of first bone motion parameters and a plurality of second bone motion parameters corresponding to the first bone and cartilage shape parameters and the second bone and cartilage shape parameters, wherein the neural network model is trained by a machine learning method based on the dataset;

    a model building module, coupled with the image analysis module and the neural network model, and configured to generate the personalized joint skeleton and cartilage model based on the first bone and cartilage 3D model, the second bone and cartilage 3D model, the first bone motion parameters and the second bone motion parameters;

    a novel computation module, coupled with the model building module, and configured to simulate the relative positions of the first bone and cartilage 3D model and the second bone and cartilage 3D model of the subject during exercise based on the personalized joint skeleton and cartilage model, and to calculate an actual cartilage shape and the cartilage wear value of the subject by eliminating overlapping cartilage regions in the first bone and cartilage 3D model and the second bone and cartilage 3D model during exercise.

2.  The measurement system for personalized bone and articular cartilage morphology of claim 1, further comprising :
    an image registration module, coupled with the image analysis module and the model building module, and configured to adjust and project the angle and position of the first bone and cartilage 3D model and the second bone and cartilage 3D model, and compare the joint bone and cartilage images from the healthy individuals in the dataset by a single-plane dynamic image registration method to calculate the first bone motion parameters and the second bone motion parameters of the subject.

3. The measurement system for personalized bone and articular cartilage morphology of claim 1, wherein each of the bone images of the subject further comprises an X-ray image.

4. The measurement system for personalized bone and articular cartilage morphology of claim 1, wherein the first bone motion parameters and the second bone motion parameters further comprise a translation parameter and a rotation parameter along the three directions of the XYZ axes.

5. The measurement system for personalized bone and articular cartilage morphology of claim 1, wherein the personalized joint skeleton and cartilage model is further visualized through a heatmap and a perspective visualization method.

6. A measurement method for personalized bone and articular cartilage morphology, comprising the following steps:

storing a dataset to a database, wherein the dataset comprises a plurality of joint bone and cartilage images of a plurality of healthy individuals, a 3D bone and cartilage model corresponding to the plurality of joint bone and cartilage images and a plurality of shape parameters;

an image capture module capturing a plurality of bone images of the subject, each of the bone images comprising a first bone image and a second bone image;

an image analysis module generating the 3D bone and cartilage model of the subject by applying a statistical shape model (SSM) learned from the dataset through the bone images of the subject and, through principal component analysis (PCA), generating a plurality of first bone and cartilage shape parameters corresponding to the first bone image and a plurality of second bone and cartilage shape parameters corresponding to the second bone image based on the 3D bone and cartilage model and the shape parameters, generating a first bone and cartilage 3D model and a second bone and cartilage 3D model based on the first bone and cartilage shape parameters and the second bone and cartilage shape parameters;

inputting the first bone and cartilage shape parameters and the second bone and cartilage shape parameters into a neural network model and generate a plurality of first bone motion parameters and a plurality of second bone motion parameters corresponding to the first bone and cartilage shape parameters and the second bone and cartilage shape parameters, wherein the neural network model is trained by a machine learning method based on the dataset;

a model building module generating the personalized joint skeleton and cartilage model based on the first bone and cartilage 3D model, the second bone and cartilage 3D model, the first bone motion parameters and the second bone motion parameters;

a novel computation module simulating the relative positions of the first bone and cartilage 3D model and the second bone and cartilage 3D model of the subject during exercise based on the personalized joint skeleton and cartilage model, and to calculate an actual cartilage shape and the cartilage wear value of the subject by eliminating overlapping cartilage regions in the first bone and cartilage 3D model and the second bone and cartilage 3D model during exercise.

7. The measurement method for personalized bone and articular cartilage morphology of claim 6, further comprising the following steps:

an image registration module adjusting and projecting the angle and position of the first bone and cartilage 3D model and the second bone and cartilage 3D model, and compare the joint bone and cartilage images from the healthy individuals in the dataset by a single-plane dynamic image registration method to calculate the first bone motion parameters and the second bone motion parameters of the subject.

8. The measurement method for personalized bone and articular cartilage morphology of claim 6, wherein each of the bone images of the subject further comprises an X-ray image.

9. The measurement method for personalized bone and articular cartilage morphology of claim 6, wherein the first bone motion parameters and the second bone motion parameters further comprise a translation parameter and a rotation parameter along the three directions of the XYZ axes.

10. The measurement method for personalized bone and articular cartilage morphology of claim 6, wherein the personalized joint skeleton and cartilage model is further visualized through a heatmap and a perspective visualiza-

tion method.

1

| 11 | database | 12 | image capture module |

image analysis module — 13

neural network model — 14

model building module — 15

novel computation module — 16

measurement system for personalized bone and articular cartilage morphology

FIG. 1

| S1 | storing a dataset to a database, wherein the dataset comprises a plurality of joint bone and cartilage images of a plurality of healthy individuals, a 3D bone and cartilage model corresponding to the plurality of joint bone and cartilage images and a plurality of shape parameters |

| S2 | an image capture module capturing a plurality of bone images of the subject, each of the bone images comprising a first bone image and a second bone image |

| S3 | an image analysis module generating the 3D bone and cartilage model of the subject by applying a statistical shape model (SSM) learned from the dataset through the bone images of the subject and, through principal component analysis (PCA), generating a plurality of first bone and cartilage shape parameters corresponding to the first bone image and a plurality of second bone and cartilage shape parameters corresponding to the second bone image based on the 3D bone and cartilage model and the shape parameters, generating a first bone and cartilage 3D model and a second bone and cartilage 3D model based on the first bone and cartilage shape parameters and the second bone and cartilage shape parameters |

| S4 | inputting the first bone and cartilage shape parameters and the second bone and cartilage shape parameters into a neural network model and generate a plurality of first bone motion parameters and a plurality of second bone motion parameters corresponding to the first bone and cartilage shape parameters and the second bone and cartilage shape parameters, wherein the neural network model is trained by a machine learning method based on the dataset |

| S5 | a model building module generating the personalized joint skeleton and cartilage model based on the first bone and cartilage 3D model, the second bone and cartilage 3D model, the first bone motion parameters and the second bone motion parameters |

| S6 | a novel computation module simulating the relative positions of the first bone and cartilage 3D model and the second bone and cartilage 3D model of the subject during exercise based on the personalized joint skeleton and cartilage model, and to calculate an actual cartilage shape and the cartilage wear value of the subject by eliminating overlapping cartilage regions in the first bone and cartilage 3D model and the second bone and cartilage 3D model during exercise |

FIG. 2

2

11 database    12 image capture module

13 image analysis module

21 image registration module    14 neural network model

15 model building module

16 novel computation module

measurement system for personalized bone and articular cartilage morphology

FIG. 3

S1 — storing a dataset to a database, wherein the dataset comprises a plurality of joint bone and cartilage images of a plurality of healthy individuals, a 3D bone and cartilage model corresponding to the plurality of joint bone and cartilage images and a plurality of shape parameters

S2 — an image capture module capturing a plurality of bone images of the subject, each of the bone images comprising a first bone image and a second bone image

S3 — an image analysis module generating the 3D bone and cartilage model of the subject by applying a statistical shape model (SSM) learned from the dataset through the bone images of the subject and, through principal component analysis (PCA), generating a plurality of first bone and cartilage shape parameters corresponding to the first bone image and a plurality of second bone and cartilage shape parameters corresponding to the second bone image based on the 3D bone and cartilage model and the shape parameters, generating a first bone and cartilage 3D model and a second bone and cartilage 3D model based on the first bone and cartilage shape parameters and the second bone and cartilage shape parameters

S4 — inputting the first bone and cartilage shape parameters and the second bone and cartilage shape parameters into a neural network model and generate a plurality of first bone motion parameters and a plurality of second bone motion parameters corresponding to the first bone and cartilage shape parameters and the second bone and cartilage shape parameters, wherein the neural network model is trained by a machine learning method based on the dataset

S41 — an image registration module adjusting and projecting the angle and position of the first bone and cartilage 3D model and the second bone and cartilage 3D model, and compare the joint bone and cartilage images from the healthy individuals in the dataset by a single-plane dynamic image registration method to calculate the first bone motion parameters and the second bone motion parameters of the subject

S5 — a model building module generating the personalized joint skeleton and cartilage model based on the first bone and cartilage 3D model, the second bone and cartilage 3D model, the first bone motion parameters and the second bone motion parameters

S6 — a novel computation module simulating the relative positions of the first bone and cartilage 3D model and the second bone and cartilage 3D model of the subject during exercise based on the personalized joint skeleton and cartilage model, and to calculate an actual cartilage shape and the cartilage wear value of the subject by eliminating overlapping cartilage regions in the first bone and cartilage 3D model and the second bone and cartilage 3D model during exercise

FIG. 4

**EP 4 749 565 A1**

Europäisches
Patentamt

European
Patent Office

Office européen
des brevets

# EUROPEAN SEARCH REPORT

**Application Number**

EP 25 18 2254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/367766 A1 (MAHFOUZ MOHAMED R [US]) 28 December 2017 (2017-12-28) * abstract * * paragraph [0252] - paragraph [0262] * * paragraph [0269] - paragraph [0280] * * figures 53, 60, 78 * | 1-10 | INV. G06T7/00 G06T13/20 |
| A | YIN PENG ET AL: "Analysis of in-vivo articular cartilage contact surface of the knee during a step-up motion", CLINICAL BIOMECHANICS, vol. 49, 26 August 2024 (2024-08-26), pages 101-106, XP085277692, ISSN: 0268-0033, DOI: 10.1016/J.CLINBIOMECH.2017.09.005 * abstract * * sections II.B, V * | 1-10 | |
| A | CHEN HAO ET AL: "Knee Cartilage Estimation Based on Knee Bone Geometry Using Posterior Shape Model", IEEE SENSORS JOURNAL, vol. 24, no. 19, 26 August 2024 (2024-08-26), pages 30600-30607, XP093326790, ISSN: 1530-437X, DOI: 10.1109/JSEN.2024.3443994 * abstract * * sections 2.2, 2.3, 4 * | 1-10 | |

**TECHNICAL FIELDS SEARCHED (IPC)**

G06T

The present search report has been drawn up for all claims

| Place of search | Date of completion of the search | Examiner |
|---|---|---|
| Munich | 21 October 2025 | Katartzis, Antonios |

## ANNEX TO THE EUROPEAN SEARCH REPORT
## ON EUROPEAN PATENT APPLICATION NO.

EP 25 18 2254

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2025

| Patent document cited in search report | Publication date | Patent family member(s) | Publication date |
|---|---|---|---|
| US 2017367766 A1 | 28-12-2017 | BR 112018068656 A2 | 05-02-2019 |
| | | BR 132020025325 E2 | 20-04-2021 |
| | | CA 3017983 A1 | 21-09-2017 |
| | | CN 109069208 A | 21-12-2018 |
| | | CN 112386302 A | 23-02-2021 |
| | | CN 116650106 A | 29-08-2023 |
| | | EP 3429497 A1 | 23-01-2019 |
| | | EP 3821842 A1 | 19-05-2021 |
| | | EP 3827777 A2 | 02-06-2021 |
| | | EP 3878391 A1 | 15-09-2021 |
| | | EP 4394703 A2 | 03-07-2024 |
| | | JP 7071479 B2 | 19-05-2022 |
| | | JP 7071480 B2 | 19-05-2022 |
| | | JP 7482601 B2 | 14-05-2024 |
| | | JP 7538168 B2 | 21-08-2024 |
| | | JP 2019520859 A | 25-07-2019 |
| | | JP 2021013833 A | 12-02-2021 |
| | | JP 2021013834 A | 12-02-2021 |
| | | JP 2021013835 A | 12-02-2021 |
| | | JP 2022096663 A | 29-06-2022 |
| | | JP 2022105556 A | 14-07-2022 |
| | | JP 2024156960 A | 06-11-2024 |
| | | US 2017367766 A1 | 28-12-2017 |
| | | US 2019167352 A1 | 06-06-2019 |
| | | US 2021015559 A1 | 21-01-2021 |
| | | US 2021022810 A1 | 28-01-2021 |
| | | US 2021022811 A1 | 28-01-2021 |
| | | WO 2017160889 A1 | 21-09-2017 |

EPO FORM P0459

For more details about this annex : see Official Journal of the European Patent Office, No. 12/82